# EUROPÄISCHE PATENTSCHRIFT

(11) **EP 3 742 205 B1**
(45) Veröffentlichungstag und Bekanntmachung des Hinweises auf die Patenterteilung: **30.06.2021**
(21) Anmeldenummer: 19175923.2
(22) Anmeldetag: 22.05.2019
(51) Int. Cl.: G01V 13/00, G01V 3/10, G01G 19/393, B65B 1/34

(54) **METALLDETEKTION IN MEHRKOPFWAAGEN**
METAL DETECTION IN MULTIPLE HEAD SCALES
DÉTECTION DE MÉTAUX DANS DES BALANCES À TÊTES MULTIPLES

(43) Veröffentlichungstag der Anmeldung: 25.11.2020
(73) Patentinhaber: Multipond Wägetechnik GmbH, 84478 Waldkraiburg (DE)
(72) Erfinder: PETERS, Andreas, 84544 Aschau am Inn (DE)
(74) Vertreter: Prüfer & Partner mbB Patentanwälte · Rechtsanwälte

(56) Entgegenhaltungen:
- JP-A- 2003 014 866
- JP-A- 2008 233 099
- JP-B2- 3 560 703
- US-A- 4 726 434
- US-A1- 2015 175 287
- US-A1- 2017 259 949
- US-B2- 6 822 171

## Beschreibung

In der Lebensmittelindustrie und der lebensmittelverarbeitenden Industrie werden zum Wiegen und Verpacken von Produkten Mehrkopfwägesysteme eingesetzt. Mehrkopfwägesysteme verteilen ihren Produktstrom aus der Beschickungseinheit über einen Verteilteller und Förderrinnen in verschiedene Vorratsbehälter. Von diesen Vorratsbehältern gelangen die Produkte in die darunterliegenden Wägeeinheiten mit Wägebehältern. Aus den gewogenen Behältern wird eine Kombination von Inhalten einzelner Wägebehälter der darunterliegenden Rutsche bzw. einem Sammeltrichter zugeführt, die dem Nennfüllgewicht am nächsten kommt. Auf dem Weg in die Verpackungseinheit passiert der Produktstrom in der Regel einen Metalldetektor, bevor das Produkt von der Verpackungseinheit verpackt werden kann.

Metalldetektoren sind ein wichtiger Bestandteil von Wäge- und Verpackungsanlagen. Metallische Fremdkörper in Lebensmitteln stellen ein hohes Gesundheitsrisiko für Konsumenten dar. Daraus kann den Produzenten erheblicher finanzieller Schaden resultieren. Deshalb ist es wichtig, einen einwandfreien Betrieb der Metalldetektoren zu gewährleisten. Sollte ein Metallobjekt im Produktfluss detektiert werden, muss daher standardgemäß das Gesamtsystem gestoppt werden oder die kontaminierte Verpackung automatisch aus dem Verpackungsprozess ausgeschleust werden. Um dies zu gewährleisten ist es wichtig, in regelmäßigen Abständen die ordnungsgemäße Funktion des Metalldetektors zu prüfen und gleichzeitig sicherzustellen dass auch während des Tests keine Kontamination am Produkt entsteht.

Es bestehen verschiedene Möglichkeiten den verbauten Metalldetektor auf Funktionsfähigkeit zu testen. Ein metallischer Prüfkörper kann grundsätzlich in den Warenstrom gebracht werden, den Metalldetektor nach einer gewissen Zeitspanne passieren, diesen auslösen und dadurch dessen Funktion prüfen.

Diese Einbringung kann manuell von Hand geschehen oder durch eine Vorrichtung. Wobei eine Vorrichtung verschiedenartig gestaltet werden kann.

Der Ort der Einbringung vom Prüfkörper kann variieren. Dieser kann an verschiedenen Positionen der Mehrkopfwaage eingebracht werden, beispielsweise bei der Beschickungseinheit oder am Verteilteller. Da die Verteilung danach zufällig abläuft, ist ein Einbringen an der Beschickungseinheit oder am Verteilteller im Hinblick auf die Prozesssicherheit nicht ratsam.

Möglich ist auch eine Einbringung auf die Dosierrinne, in die Vorratsbehälter, in die Wägebehälter, oder in sonstige Behälter. Geeignet wäre beispielsweise der Vorratsbehälter, da dieser leicht zugänglich ist. Wägebehälter sind unter den Vorratsbehältern angeordnet und daher und schwierig zugänglich. Die Dosierrinne müsste den Prüfkörper erst selbst fördern, damit er Prüfkörper in den Vorratsbehälter gelangt.

Eine Einbringung von Prüfkörpern in die Rutsche, den Sammeltrichter, einem Sammelbehälter oder dem Übergabesystem ist zwar möglich, aber die Zugänglichkeit ist je nach Aufstellung schwierig und die Kombination mit Produktcharge sehr aufwändig. Diese ist aber nötig, damit Prüfkörper mit ähnlicher Geschwindigkeit den Metalldetektor passiert wie das Produkt. Ansonsten wird die Sensitivität vom Metalldetektor falsch eingestellt.

Zudem gibt es die Möglichkeit, dass der Prüfkörper lose eingebracht wird und dann manuell zurückgeholt werden muss, oder die Zuführvorrichtung ist mit einem Rückholmechanismus ausgestattet.

Hinsichtlich des Betriebszustands der Anlage sind ebenfalls mehrere Möglichkeiten vorhanden: Diese kann teilweise ausgeschaltet sein, wobei nur der Prüfkörper eingebracht wird.

Ferner kann die Anlage ohne Produkt laufen, oder der Prüfkörper wird während des Normalbetriebes eingebracht. Das Anhalten der Anlage und Leerlauf führt zu Produktionsverzögerungen.

Ebenfalls gib es für das Verhalten der Verpackungseinheit, nachdem ein Metallfund detektiert wurde, mehrere Möglichkeiten: Diese kann danach in Stopp gefahren werden oder sie läuft weiter.

Ferner gibt es mehrere Möglichkeiten für die Lokalisierung und Ausschleusung der kontaminierten Verpackung. So können die Lokalisierung sowie die Ausscheidung manuell vor sich gehen, oder aber automatisiert durch interne Zähler, weitere Sensoren, Druckluftdüsen, Schieber oder andere mechanische Elemente, welche die betreffende Verpackung ausschleusen.

US-Patent. No. 4,726,434 beschreibt ein Verfahren, um den Prozess des Testens des Metalldetektors mit einem Prüfkörper und des Ausschleusens zu automatisieren. Hier wird in bestimmten Zyklen manuell oder durch ein gesteuertes Förderband der Prüfkörper an einen spezifischen Ort, d.h. Vorrats- oder Wägebehälter, in den Warenstrom der Mehrkopfwaage eingebracht.
Durch die gleichmäßige Förderung der Dosierkaruselleinrichtung und den festgelegten Ort der Einbringung kann die Wanderung des Prüfkörpers gut nachvollzogen werden. Die Verpackung, die den Prüfkörper enthält, kann mittels eines Registers auf der Förderlinie nach dem Übergabesystem lokalisiert und durch einen mechanischen Hebel aus dem normalen Förderstrom ausgeschleust werden.
Zunächst bezieht sich die Ausführung primär auf eine Kombination aus Mehrkopfwaage und Dosierkaruselleinrichtung. Dabei werden leere Behälter angeliefert, durch Produktchargen aus der Mehrkopfwaage befüllt und im noch offenen Zustand weiter auf das Förderband geleitet. Dadurch kann der Prüfkörper in befülltem Behälter relativ leicht lokalisiert und der Prüfkörper entnommen werden. Die Verpackung muss nicht zerstört werden, da diese noch nicht geschlossen ist.
Dieses Verfahren hat allerdings auch Nachteile
Die Verpackung wird direkt in der Schlauchbeutelmaschine erzeugt. Die Lokalisierung einer Verpackung mit Prüfkörper und Entnahme des Prüfkörpers gestaltet sich schwierig. Die Verpackungen sind nach dem Abfüllen geschlossen und müssen erst zerstört werden um den Prüfkörper zu entnehmen.
Ferner besteht die Zuführvorrichtung der Prüfkörper aus einem gesteuerten Band, auf dem Transportschalen befestigt sind, die Prüfkörper beinhalten. Förderbänder sind jedoch schwierig hygienisch auszuführen. Es kann nicht immer sichergestellt werden, dass nur ein Prüfkörper zugeführt wird. Dreht sich der Antrieb weiter, so können auch mehrere Prüfkörper eingebracht werden. Prüfkörper können aufgrund der Verschmutzung in den Transportschalen festkleben und das Band kann diese weiter transportieren als beabsichtigt und diese am nicht gewünschten Ort abwerfen.
Eine Kontrolle des Füllstandes ist ebenso wenig vorgesehen und gestaltet sich aufgrund der Funktionsvereinigung aus Transport und Bevorratung schwierig.

JP 2008 233099 A1 offenbart ein Metalldetektionsgerät für Kombinationswaagen, das kalibriert werden kann, ohne dass ein Metallprobenstück mit einem zu verarbeitenden Gegenstand in Kontakt gebracht werden muss, wodurch die Notwendigkeit der Rückgewinnung des Metallprobenstücks vermieden wird. In der Außenseite eines Sammeltrichters in einer Kombinationswaage, der einen Artikel durch ihr Inneres passieren lässt, wird d ein Metalldetektor angeordnet. Ein Prüfstück ist an einem Band aus einem nichtmagnetischen Material befestigt, das entlang der Auslaufrutsche angeordnet ist, und das Band ist so angeordnet, dass es das Prüfstück durch den Metalldetektor laufen lässt und von einem Motor angetrieben wird.

US-Patent No. 6822,171 beschreibt ein Testsystem mit einem Testkörper, welcher mit einem Ausfahrmechanismus oberhalb des Metalldetektors versehen ist. Dieser lässt sich im Produktstrom aus- und wieder einfahren. Hier kann ein Test mit laufendem Produktstrom durchgeführt werden. So können Leerlaufzeiten, Verwiegungseinflüsse sowie ein Aussortieren aus dem Verpackungsstrom vermieden werden.

Dieses Vorgehen hat trotz seiner Vorzüge folgende Nachteile: Die Messsonde kann den Produktfluss behindern und somit die Zykluszeit während des Tests verlängern. Zudem kann Produkt, das mit der Messsonde in Kontakt kommt, diese verunreinigen. Diese lässt sich nach dem Einfahren nur schwer reinigen und kann beim nächsten Test zu Verunreinigung der verwogenen Nahrungsmittel führen. Während des Tests kann ein weiterer metallischer Körper den Sensor unbemerkt passieren, mitverpackt werden und zum Endverbraucher gelangen. Nichtmetallische Teile der Messapparatur können sich durch den Kontakt mit dem Produktstrom lösen und unbemerkt in das Produkt und somit zum Endverbraucher gelangen. Ein Test mit verschiedenen Prüfkörpern ist nur durch Umbau oder das gleichzeitige Anbringen verschiedener Sondenaufbauten möglich. Des Weiteren lässt sich dieses Konzept nicht an alle Rutschen und Sammelbehälter anpassen.

Es ist daher die objektive technische Aufgabe der vorliegenden Erfindung, eine Abwurfvorrichtung für Prüfkörper für ein Metalldetektionssystem bereitzustellen, bei dem es ermöglichst wird, dass Überprüfungen dieses Metalldetektionssystems auf einfache und sichere Art und Weise durchgeführt werden können. Ferner ist es eine objektive technische Aufgabe dieser Erfindung, eine Abwurfvorrichtung und ein Verfahren bereitzustellen, mit denen Prüfkörper kontrolliert und gezielt in eine Mehrkopfwaage eingebracht werden können und diese sicher und zuverlässig auch wieder ausgeschleust werden können, so dass automatisierte Testreihen durchgeführt werden können.

Die objektive technische Aufgabe wird durch eine Abwurfvorrichtung gemäß Anspruch 1, ein System aus Abwurfvorrichtung und einer Mehrkopfwaage gemäß Anspruch 11 sowie ein Verfahren gemäß Anspruch 12 gelöst. Weitere vorteilhafte Ausgestaltungen sind Gegenstand der abhängigen Ansprüche.

Metalldetektoren an einer Mehrkopfwaage oder deren Verpackungseinheit werden mit Prüfkörpern geprüft und getestet, welche in die Mehrkopfwaage gezielt eingeworfen werden. Ein Prüfkörper beinhaltet an irgendeiner Stelle Metall und hat vorzugsweise die Form eines Zylinders oder Prismas. Ein solcher Prüfkörper kann aber beispielsweise auch einen metallischen Kern aufweisen (beispielsweise aus Eisen), zusätzlich aber eine Beschichtung bzw. äußere Hülle aus einem Polymer, beispielsweise einem Elastomer, aufweisen.

Die Erfindung beinhaltet eine Abwurfvorrichtung für Prüfkörper eines Metalldetektionssystems zum Testen eines Metalldetektors einer Mehrkopfwaage oder einer Verpackungseinheit, wobei die Abwurfvorrichtung beinhaltet:
Mindestens ein Magazin, welches dazu angepasst ist, mindestens einen Prüfkörper aufzunehmen, einen Sensor, der an mindestens einer Stelle das Vorhandensein eines oder mehrerer Prüfkörper im Magazin detektiert, ein erstes horizontales Element, insbesondere Blech, mit einer ersten Öffnung, welches mindestens den Durchmesser eines Prüfkörpers aufweist, und einen Schwenkarm, welcher mittels eines Antriebs zwischen mindestens zwei Positionen bewegbar ist.
Ferner beinhaltet die Abwurfvorrichtung eine Transportvorrichtung für Prüfkörper, welche mit dem Schwenkarm verbunden ist und welche aufweist: ein zweites horizontales Element, insbesondere Blech, welches eine zweite Öffnung aufweist, welches mindestens den Durchmesser eines Prüfkörpers aufweist, wobei unter der zweiten Öffnung eine Aufnahmevorrichtung befestigt ist. Diese Aufnahmevorrichtung muss entsprechend auch so ausgebildet sein, dass diese mindestens den Durchmesser eines Prüfkörpers aufweist, damit sie diesen horizontal bewegen kann. Der Schwenkarm kann sich zwischen mindestens zwei Positionen bewegen: in einer ersten Position ist die zweite Öffnung des zweiten horizontalen Elements unterhalb des Magazins, so dass ein Prüfkörper aus dem Magazin durch die zweite Öffnung des zweiten horizontalen Elements in den Hohlzylinder fallen kann. In einer zweiten Position des Schwenkarms befindet sich die Aufnahmevorrichtung über der ersten Öffnung des ersten horizontalen Elements, so dass der sich in der Aufnahmevorrichtung befindliche Prüfkörper durch die erste Öffnung des ersten horizontalen Elements abgeworfen werden kann, durch die Öffnung einer Dosierrinne in den darunter befindlichen Vorratsbehälter, vorzugsweise mittig in den Vorratsbehälter der Mehrkopfwaage. In allen Positionen des Schwenkarms außer der ersten Position verhindert das zweite horizontale Element das Nachfüllen von weiteren Prüfkörpern aus dem Magazin, da sich die Prüfkörper auf diesem zweiten horizontalen Element praktisch aufstauen.
Dies hat den Vorteil, dass das Magazin sozusagen mit einer Magazinfüllstandskontrolle ausgestattet werden kann. Um Testreihen in einzelnen Prozesszyklen durchzuführen, ist diese Einzelzuführung der Prüfkörper hinsichtlich des Prüfverfahrens vorteilhaft. Ferner ist hier ein hygienegerechtes und sicheres Design der Sensoranlage bzw. der Abwurfvorrichtung vorhanden, was ein Ablösen von Bauteilen von der Messapparatur verhindert.
Ferner können Fehlabwürfe vermieden werden, da die zweite Öffnung des zweiten horizontalen Elements, das ja unter dem Magazin positioniert ist, sowie die erste Öffnung des ersten horizontalen Elements, durch das ein Prüfkörper abgeworfen wird, nicht untereinander angeordnet sind. Zum Transport eines Prüfkörpers in horizontaler Ebene ist die Transportvorrichtung nötig. Somit können Prüfkörper aus dem Magazin durch eine Fehlfunktion nicht direkt in die Mehrkopfwaage abgeworfen werden. Ferner ermöglicht es die vorliegende Erfindung durch die Einzelzuführung der Prüfkörper, Testreihen zum Test des Metalldetektors mit unterschiedlichen Prüfkörpern durchzuführen, sowie diese Testreihen in einzelnen Prozesszyklen durchzuführen. Dies ermöglicht auch eine automatische Protokollierung der Testergebnisse.

Ferner ermöglicht die erfindungsgemäße Vorrichtung die Ausschleusung von Metallfunden sowie eine Verfolgbarkeit und Ausschleusungsmöglichkeit der Prüfkörper auch ohne Detektorfunktion - so kann beispielsweise auch eine Zugabe von anderen Zusatzartikeln zum Produkt erfolgen, ohne dass diese wieder ausgeschleust werden müssen (beispielsweise Werbeartikel, Bonuszugaben oder Preise für ein Gewinnspiel) .

Ferner wird mit der vorliegenden Erfindung ein hygienisches und sicheres Design ermöglicht, das durch einfache kompakte Bauweise ein Ablösen der Bauteile der Messapparatur verhindert.

Vorzugsweise ist das Magazin röhrenförmig ausgestaltet und hat weiter vorzugsweise mindestens eine seitliche Öffnung oder einen mindestens teilweise durchsichtigen Abschnitt, die/der dazu angepasst ist, eine optische Sichtprüfung des Füllstands des Magazins zu ermöglichen. Dies trägt weiter zur einfachen und sicheren Handhabung der Abwurfvorrichtung bei.

Weiter ist das Magazin vorzugsweise dazu in der Lage, eine bestimmte Anzahl an Prüfkörpern, vorzugsweise drei bis vier Prüfkörper aufzunehmen, und hat an seiner oberen Stelle eine ergonomische Öffnung zum Befüllen. So kann das Magazin einfach befüllt werden.

Vorzugsweise weist die Abwurfvorrichtung ferner mindestens einen Sensor auf, welcher ein optischer Distanzsensor ist, dessen Lichtstrahl parallel zur Hauptachse des Magazins verläuft. Beim optischen Sensor kann somit aus einer gemessenen Distanz Kenntnis über den Füllstand der Prüfkörper erlangt werden - es wird also die Länge aller aneinander gereihten Prüfkörper vermessen, um den Füllstand des Magazins festzustellen. Vorzugsweise hat das Magazin eine längliche Öffnung, die somit auch das Austreten des Sensorstrahls erlaubt, damit Triangulation gewährleistet werden kann.

Vorzugsweise ist an der Abwurfvorrichtung ein Metallsensor vorgesehen, welcher prüft, ob ein Prüfkörper, der sich im Magazin befindet, metallische Bestandteile aufweist.

Weiter vorzugsweise sind daher sowohl ein optischer Sensor als auch ein Metallsensor vorhanden, wobei hier mit dem optischen Sensor der Füllstand des Magazins überprüft werden kann und mit dem Metallsensor überprüft werden kann, ob beispielsweise immer der unterste Prüfkörper tatsächlich Metall beinhaltet und somit auch ein echter Prüfkörper ist.
Aus diesem Grund liefern die Sensoren nicht nur sichere Informationen darüber, wie viele Prüfkörper sich noch im Magazin befinden und/oder die Prüfkörper auch tatsächlich aus Metall sind (und somit keine falschen Prüfkörper im Magazin vorhanden sind), ferner sind der Sensor und das Magazin nach Anforderung der hygienegerechten Gestaltung ausgestaltet, so dass ein Einsatz in der Lebensmittelindustrie bzw. lebensmittelverarbeitenden Industrie problemlos möglich ist.

Vorzugsweise ist der Antrieb für den Schwenkarm elektrisch, pneumatisch oder magnetisch ausgeführt, wobei der Antrieb weiter vorzugsweise ein bürstenloser Gleichstrommotor mit Planetengetriebe ist. Der Antrieb ist noch weiter vorzugsweise so beschaffen, dass er eine zylindrische Form aufweist. Somit kann der Schwenkarm sehr präzise gesteuert werden und auch schnell wieder abgestoppt werden, und die zylindrische Form trägt dazu bei, dass der Motor in einem Hohlzylinder eingebaut werden kann, beispielsweise einem Gehäuse, welches weiter vorzugsweise zylindrisch ist. Auch hier wird der hygienegerechten Gestaltung Rechnung getragen.

Vorzugsweise ist die Abwurfvorrichtung so eingerichtet, dass der Schwenkarm und die Transportvorrichtung dazu angepasst sind, einen Prüfkörper in einer horizontalen Ebene vom Magazin zum Abwurfort zu transportieren, wobei die Transportvorrichtungen weiter vorzugsweise so ausgestaltet sind, dass Prüfkörper formschlüssig vom Schwenkarm und der daran angeschlossenen Transportvorrichtung aufgenommen und transportiert werden können, und weiter vorzugsweise sind der Schwenkarm und sein Schwenkwinkel so angepasst, dass immer nur ein Prüfkörper gleichzeitig transportiert wird.

Dies ermöglicht es, eine gute Kontrolle über die im System befindlichen Prüfkörper zu haben, es kann somit immer der Füllstand der Prüfkörper im Magazin gemessen werden, und es kann lediglich ein weiterer Prüfkörper im Hohlzylinder der Transportvorrichtung vorhanden sein. Vorzugsweise ist die Abwurfvorrichtung so ausgestattet, dass sie ein zylindrisches Gehäuse und einen drehbar daran angeordneten Halter aufweist, an welchem das Magazin und das erste horizontale Element befestigt sind, und wobei am zylindrischen Gehäuse ferner ein Sensorhalter angebracht ist, welcher dazu angepasst ist, den Sensor zu halten. Dies erlaubt die Ausrichtung der Sensorachse und der Magazinachse.

Vorzugsweise weist die Abwurfvorrichtung oder das Mehrkopfäwgesystem ferner mindestens einen Ständer und mindestens einen horizontalen Ausleger auf, welche jeweils über ein Kreuzklemmstück miteinander verbunden sind, und auch das zylindrische Gehäuse und der horizontale Ausleger sind durch ein Kreuzklemmstück verbunden. Dies trägt wiederum der genauen Positionierbarkeit Rechnung. Das Kreuzklemmstück hat vorzugsweise eine Dichtung. Dies trägt einer hygienegerechten Gestaltung Rechnung.

Vorzugsweise weist die Abwurfvorrichtung ferner eine Auswerteeinheit auf, welche dazu eingerichtet ist, die Signale des Sensors zu verarbeiten und beispielsweise ein Alarmsignal abzugeben, wenn der Füllstand des Magazins sich in Richtung Null bewegt und somit der Prüfprozess nicht mehr richtig durchgeführt werden könnte. Dies ermöglicht es, dass hier schnellstens Prüfkörper nachgefüllt werden können, ohne dass das gesamte Prüfverfahren unterbrochen werden muss bzw. wieder vorne gestartet werden muss.

Ferner offenbart die vorliegende Erfindung ein System bestehend aus mindestens einer Abwurfvorrichtung, mindestens einem Prüfkörper und einer Mehrkopfwaage, wobei die Mehrkopfwaage einen Verteilteller, mehrere Dosierrinnen, mehrere Vorratsbehälter, mehrere Wägebehälter und einen Sammeltrichter aufweist. Nach der Mehrkopfwaage eine kann eine Verpackungseinheit angeordnet sein. Hier kann ein weiterer Metalldetektor angebracht sein. Die erste Öffnung des horizontalen Elements ist über einem Vorratsbehälter der Mehrkopfwaage angeordnet, so dass Prüfkörper hier direkt, vorzugsweise am Auslauf der Dosierrinne, in die Öffnung des Vorratsbehälters, vorzugsweise mittig, abgeworfen werden können. Vorzugsweise sind der Ständer und der horizontale Ausleger ferner so ausgeführt, dass sie innen Kabel aufnehmen können. Dies gewährleistet eine einfache und sichere Reinigung, da an der Außenseite der Abwurfvorrichtung keine Hohlräume bzw. ungerade Fläche entstehen können, welche eine schwierige Reinigbarkeit bedeuten würden. Die Kreuzklemmstücke an Ständer und Ausleger tragen ferner dazu bei, dass die Abwurfvorrichtung in Höhenrichtung, Umfangsrichtung sowie Radialrichtung ausgerichtet werden kann. Ferner ist die Abwurfhöhe der Prüfkörper über dem Vorratsbehälter minimal, und kann daher so eingestellt werden, dass der Prüfkörper bestenfalls in der Mitte der Vorratsbehälter auftrifft.

Weiterhin beinhaltet die vorliegende Erfindung ein Verfahren zum Testen eines Metalldetektors einer Mehrkopfwaage oder einer Verpackungseinheit mittels einer erfindungsgemäßen Abwurfvorrichtung, das die folgenden Schritte umfasst:
a) Prüfen der Verfügbarkeit von Prüfkörpern zur Metalldetektion;
b) falls in Schritt a) ein positives Ergebnis erzielt wird: Abwurf eines Prüfkörpers oberhalb einer Dosierrinne in Öffnung des darunter angeordneten Vorratsbehälters der Mehrkopfwaage;
c) falls in Schritt a) ein negatives Ergebnis erzielt wird: Aufforderung zum Auffüllen des Magazins und Verhinderung des Abwurfes eines Prüfkörpers.
d) Prüfen, ob der Metalldetektor der Mehrkopfwaage oder der Verpackungseinheit den Prüfkörper detektiert; Ausgabe und/oder Speichern eines positiven oder negativen Ergebnisses.

Im Folgenden wird eine Ausführungsform der vorliegenden Erfindung unter Bezugnahme auf die beigefügten Zeichnungen näher erläutert.
- Fig. 1: ist eine isometrische Ansicht der Abwurfeinrichtung.
- Fig. 2: ist eine isometrische Ansicht des Systems aus Abwurfeinrichtung und Mehrkopfwaage mit angeschlossener Verpackungseinheit.
- Fig. 3: zeigt eine detaillierte Anordnung der Abwurfeinrichtung oberhalb einer Dosierrinne einer Mehrkopfwaage.
- Fig. 4: zeigt einen Schnitt durch die Waage und der Verpackungseinheit mit einem eingezeichneten Produktfluss.
- Fig. 5: ist ein Flussdiagramm eines Wägevorgangs, mit Mehrkopfwaage und Verpackungssystem, bei welchem die Möglichkeit besteht, dass ein Metallfund durch einen Metalldetektor erkannt wird.
- Fig. 6: ist ein Flussdiagramm eines Prüfvorgangs, bei welchem ein Metalldetektionssystem gemäß der vorliegenden Erfindung auf Funktion geprüft wird, und entsprechend in der Mehrkopfwaage sowie dem Verpackungssystem integriert ist.
- Fig. 7: stellt jeweils isometrische Ansichten mehrerer Zustände der Abwurfeinrichtung dar, und verdeutlicht somit den Vorgang, in welchem ein Prüfkörper abgeworfen wird.

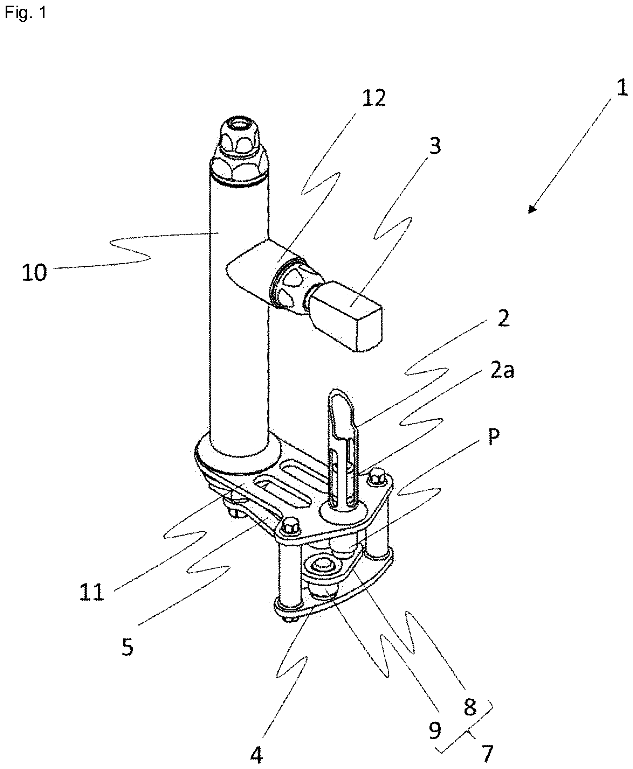

In Fig. 1 ist eine erfindungsgemäße Abwurfeinrichtung 1 für die Prüfung eines Metalldetektionssystems zu sehen, bei welchem ein Magazin 2 mit mehreren seitlichen Öffnungen 2a auf einem Halter 11 angebracht ist. Eine solche Abwurfeinrichtung kann eine Schutzart bis IP 69 nach DIN EN 60529 (VDE 0470) aufweisen. Unter dem Halter ist mit gewissem Abstand ein erstes horizontales Element 4 montiert, welches eine erste horizontale Öffnung 4a (hier nicht gezeigt) aufweist. Das Magazin 2 ist dazu angepasst, einen oder mehrere Prüfkörper P formschlüssig aufzunehmen. Ferner ist ein Schwenkarm 5 offenbart, dessen eines Ende mit einem Antrieb 6 (hier nicht gezeigt) verbunden ist, welcher im zylindrischen Gehäuse 10 angeordnet ist, und dessen anderes Ende mit einer Transportvorrichtung 7 verbunden ist, welche ein zweites horizontales Element 8 mit einer zweiten Öffnung 8a (hier nicht gezeigt) sowie eine Aufnahmevorrichtung 9, welche verbunden sind, aufweist. In dieser Ausführungsform ist die Aufnahmevorrichtung 9 als Hohlzylinder ausgeführt. In dieser Ansicht ist eine Position vom Schwenkarm gezeigt, in welchem sich der Hohlzylinder 9 direkt oberhalb der ersten Öffnung 4a (hier nicht gezeigt) des ersten horizontalen Elements 4 befindet. Unterhalb des Magazins 2 ist das zweite horizontale Element 8 vorhanden, auf welchem sozusagen der unterste Prüfkörper P, welcher aus dem Magazin herausgeglitten ist, aufliegt. Dieser ist jedoch nicht komplett aus dem Magazin 2 hervorgetreten, so dass dieser sich in einer sicheren Position befindet und somit nicht herausfallen kann. Ferner ist am zylindrischen Gehäuse 10 noch ein Sensorhalter 12 angebracht, an welchem schlussendlich ein Sensor 3 angebracht ist. In dieser Ausführungsform ist der Sensor 3 ein optischer Sensor, welcher direkt über dem Magazin angeordnet ist und somit den Füllstand des Magazins entsprechend detektieren kann. Dieser Sensor kann also dazu beitragen festzustellen, ob im Magazin 2 noch genügend Prüfkörper P vorhanden sind.

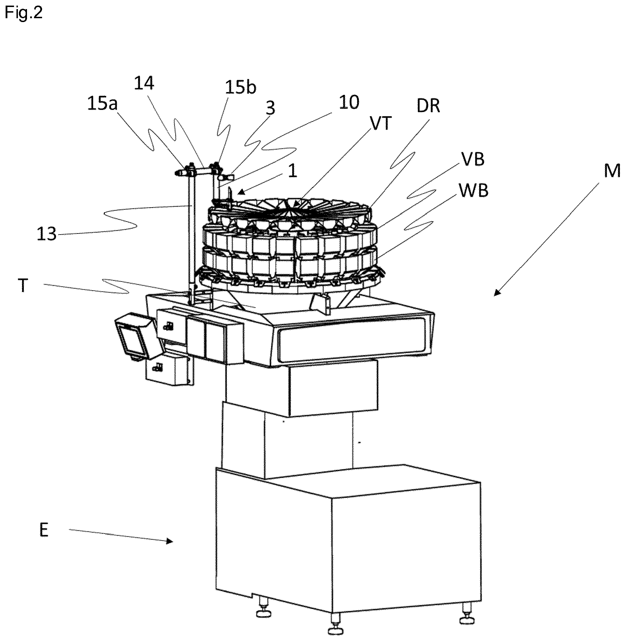

In Fig. 2 ist eine Mehrkopfwaage M mit einem Verteilteller VT, mehreren Dosierrinnen DR, Vorratsbehältern VB, Wägebehältern WB, einem Sammeltrichter T sowie einer Verpackungseinheit E gezeigt. Am oberen Teil dieser Mehrkopfwaage ist ein Ständer 13 angebracht ist ein, an welchem mit einem Kreuzklemmstück 15a ein horizontaler Ausleger 14 befestigt ist. An diesem ist wiederum durch ein weiteres Kreuzklemmstück 15b das zylindrische Gehäuse 10 angebracht. Auch ist hier die Abwurfvorrichtung 1 mit dem Sensor 3 zu sehen, welcher oberhalb der Dosierrinnen D über einem Vorratsbehälter über der Mehrkopfwaage M angebracht ist. Somit ist es möglich, Prüfkörper P vorzugsweise mittig in den Vorratsbehälter VB abzuwerfen. Dabei sind sowohl Länge des Auslegers 14, Schwenkrichtung sowie die Höhe einstellbar. Die Kreuzklemmstücke 15a und 15b sind hygienisch ausgeführt und die Kabel sind aus Hygienegründen durch die Rohre verlegt.

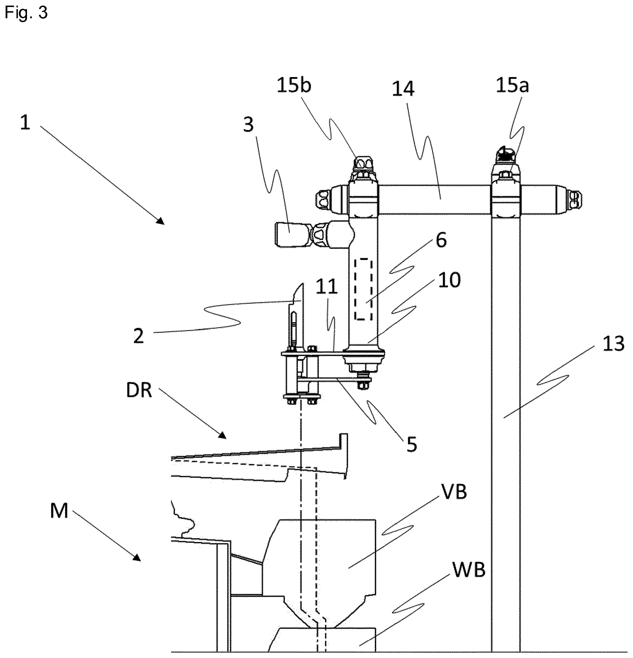

In Fig. 3 ist die Anordnung der Abwurfvorrichtung 1 auf der Mehrkopfwaage M über der Dosierrinne DR nochmals genauer dargestellt. Die Dosierrinne DR ist über einem Vorratsbehälter VB und Wägebehälter WB vorgesehen. An einer Mehrkopfwaage M ist der Ständer 13 angebracht, welcher über ein Kreuzklemmstück 15a verbunden, noch einen horizontalen Ausleger 14 aufweist, mit welchem wiederum durch ein weiteres Kreuzklemmstück 15b das zylindrische Gehäuse 10 verbunden ist. Hier ist auch zu sehen, dass der Sensor 3 direkt oberhalb des Magazins 2 angeordnet ist. Der Schwenkarm 5 ist mit dem Antrieb 6 (hier schematisch gezeigt) verbunden, wobei der Antrieb 6 sich im zylindrischen Gehäuse 10 befindet. Das Magazin 2 ist am Halter 11 befestigt, welcher wiederum mit dem zylindrischen Gehäuse 10 verbunden ist.
Durch flexible Anordnung mittels Kreuzklemmstücke ist es jederzeit möglich, die Position der Abwurfvorrichtung entsprechend zu ändern und um sicherzustellen, dass die Abwurföffnung, hier die erste Öffnung 4a im ersten horizontalen Element (hier nicht gezeigt) sich direkt oberhalb des Auslasses einer Dosierrinne und der Öffnung eines Vorratsbehälters der Mehrkopfwaage M angeordnet ist. Diese Position kann durch die Kreuzklemmstücke 15a und 15b auch variabel eingestellt werden.

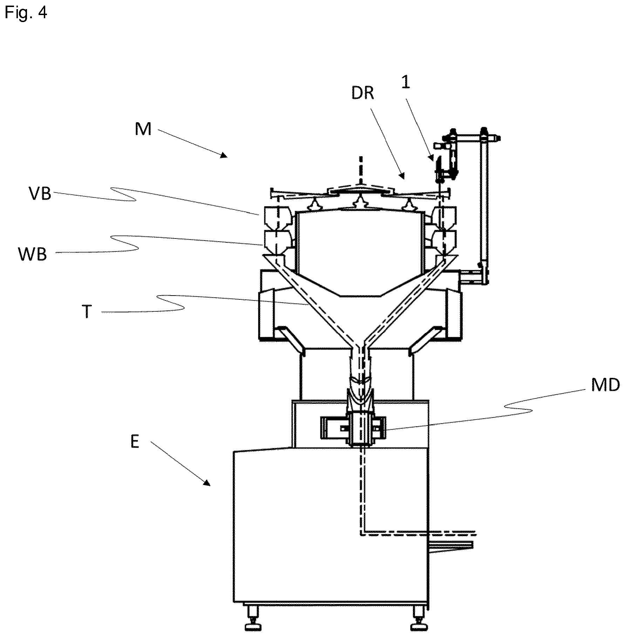

Fig. 4 zeigt einen Schnitt durch die Gesamteinheit aus Mehrkopfwaage M, Dosierrinne DR, Vorratsbehältern VB, Wägebehältern WB, Sammeltrichter T sowie Verpackungseinrichtung E. Zwischen Sammeltrichter T und Verpackungseinrichtung E ist ein Metalldetektor MD vorhanden. Hier ist auch die Abwurfvorrichtung 1 gezeigt, und es wird gezeigt, welchen Weg W1 das Produkt und Weg W2 die Metallprüfkörper P (hier nicht im Detail gezeigt) durch die Mehrkopfwaage M sowie durch das Verpackungssystem E nehmen können. Ferner ist der typische Weg des Produkts durch die Mehrkopfwaage und die Verpackungseinrichtung durch eine gestrichelte Linie angedeutet; der Weg des Prüfkörpers durch die Mehrkopfwaage und die Verpackungseinrichtung ist durch Strich-Punkt Linie angedeutet.

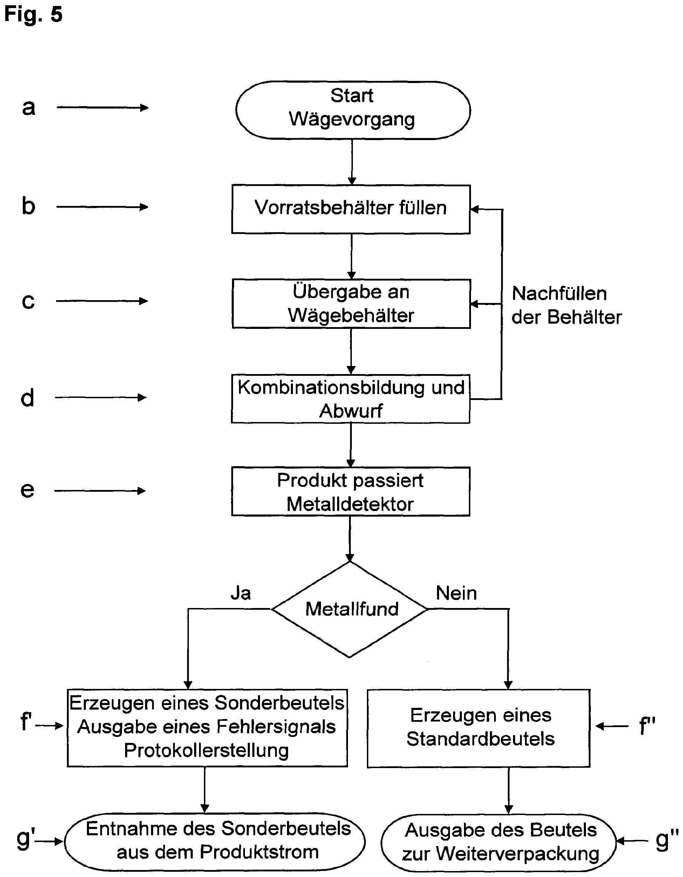

Fig. 5 zeigt ein Flussdiagramm eines normalen Wägevorgangs einer Waage mit eingebautem Metalldetektor. Bei diesem Vorgang wird kein Prüfkörper in den Produktstrom abgeworfen bzw. es ist keine Abwurfvorrichtung vorhanden. Nach dem Start des Wägevorgangs (Schritt a) wird der Produktstrom auf den Verteilteller geleitet, dieser verteilt diesen auf angrenzende Dosierrinnen, welche das Produkt in ihre jeweiligen Vorratsbehälter fördern (Schritt b). Nach einer vorbestimmten Zeit stellen die Dosierrinnen die Förderung ein. Die Vorratsbehälter des Mehrkopfwägesystems M erhalten dann je eine Teilmenge des zu erreichenden Füllgewichts. Diese werden, sollte der darunterliegende Wägebehälter leer sein, an den Wägebehälter weitergegeben (Schritt c). Daraufhin erfolgt aus den Teilmengen eine Kombinationsbildung mit dem Zweck, dem Nenn-Füllgewicht möglichst nahe zu kommen. Die gefundene Kombination der Wägebehälter wird in den Sammeltrichter entleert (Schritt d). Leere Behälter werden automatisch wieder befüllt. Der Produktstrom passiert zwischen dem Sammeltrichter und der Verpackungseinheit E einen Metalldetektor MD, welcher an der Mehrkopfwaage M oder an der Verpackungseinheit E angebracht ist (Schritt e). Wenn dieser einen Metallfund erkennt, wird von der Verpackungsmaschine ein Sonderbeutel generiert, welcher die kontaminierte Produktcharge aufnimmt (Schritt f). Dieser Sonderbeutel ist von den anderen Verpackungsbeuteln optisch leicht zu unterscheiden, damit er einfach aus dem Strom ausgegebener Beutel aussortiert werden kann (Schritt g'). Außerdem wird ein Fehlersignal abgegeben und ein Protokolleintrag erstellt. Der Sonderbeutel wird nach Ausgabe aus der Verpackungseinheit E aus dem Produktionsprozess entnommen. Dieser Prozess wird wiederholt, solange die Anlage in Betrieb ist. Dies ermöglicht es, Metallfremdkörper im Produktstrom leicht zu erkennen und entsprechend auszusortieren. Wird kein Metall gefunden, wird ein Standardbeutel erzeugt (Schritt f') und der Beutel zur Weiterverpackung ausgegeben (Schritt g").

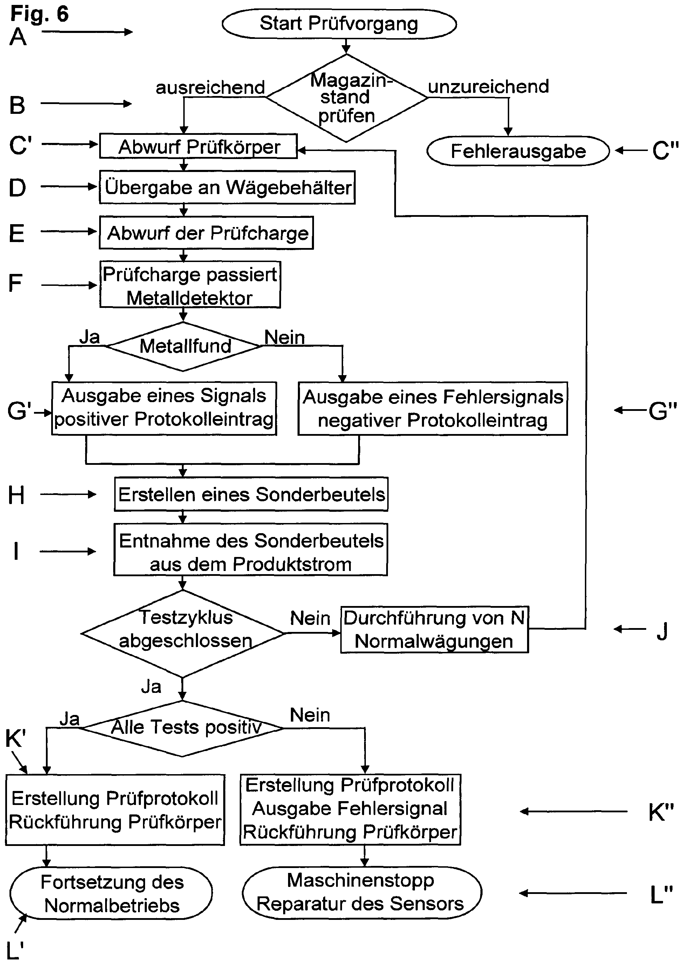

Fig. 6 zeigt ein auf Fig.5 basierendes und erweitertes Flussdiagramm. In diesem werden Prüfkörper aus der Abwurfvorrichtung in den Produktstrom eines Wägevorganges abgeworfen, um die Funktion eines Metalldetektors zu testen. Nach dem Start des Metalldetektortests (Schritt A) wird zuerst der Füllstand des Magazins 2 überprüft (Schritt B), ob in diesem noch genügend Prüfkörper P vorhanden sind. Ist dieser Füllungszustand unzureichend, wird eine Fehlermeldung ausgegeben (Schritt C"), und der Prüfvorgang kann erst nach dem Auffüllen des Magazins 2 neu gestartet werden. Ist der Füllstand des Prüfkörpermagazins 2 ausreichend, wird ein Prüfkörper P durch die Abwurfvorrichtung 1 entsprechend abgeworfen (Schritt C'). Der Füllstand des Magazins 2 wird von dem Sensor 3 geprüft.
Der weitere Verlauf ist gleich wie dem in Fig. 5 dargestellten Wägeablauf (Schritte D und E). Der Unterschied ist hier, dass mit Absicht ein Prüfkörper P, der Metall enthält, in das Wägesystem eingebracht wird. Dieser Prüfkörper P soll durch den Metalldetektor MD der Mehrkopfwaage M oder der Verpackungseinheit E detektiert werden (Schritt F), weswegen bei einem positiven Metallfund ein positiver Protokolleintrag erfolgt und ein Signal ausgegeben wird (Schritt G'), und bei einem nicht-vorhandenen Metallfund ein Fehlersignal ausgegeben wird (das Nicht-Finden des Prüfkörpers P liefert Hinweise auf eine Fehlfunktion des Metalldetektors MD an der Mehrkopfwaage M oder der Verpackungseinheit E), und ferner wird ein negativer Protokolleintrag vorgenommen (Schritt G"). In jedem Fall wird ein Sonderbeutel erstellt (Schritt H), welcher aus dem Produktstrom entnommen wird (Schritt I). Nun wird bestimmt, ob der Testzyklus abgeschlossen ist, der daraus besteht, mehrere Prüfkörper, die sich im Magazin befinden, nacheinander abzuwerfen und die Detektion durch den Metalldetektor zu testen. Ist der Testzyklus noch nicht abgeschlossen, werden N Normalwägungen durchgeführt (Schritt J). Ist der Testzyklus abgeschlossen, wird bestimmt, ob alle Tests positiv gewesen sind. Wenn dies der Fall ist, wird ein Prüfprotokoll erstellt (Schritt K'), und sämtliche Prüfkörper P können nach Prüfung und Reinigung in das Magazin 2 der Abwurfvorrichtung 1 zurückgeführt werden. Danach ist eine Fortsetzung des Normalbetriebs der Mehrkopfwaage möglich (Schritt L'). Sind nicht alle Tests positiv, wird ein Fehlersignals ausgegeben, dann wird ebenfalls ein Prüfprotokoll erstellt und die Prüfkörper nach Prüfung und Reinigung werden zurückgeführt (Schritt K"). Allerdings muss hier die Maschine gestoppt werden und der Sensor untersucht werden und eventuell repariert werden (Schritt L").
Die Anordnung der Abwurfvorrichtung 1 mit dem Sensors 3 oberhalb des Magazins 2 erlaubt also, dass sämtliche Abwürfe von Prüfkörpern P genauestens dokumentiert werden können und dass sichergestellt werden kann, dass auch sämtliche Prüfkörper P von der Abwurfeinrichtung abgeworfen wurden.

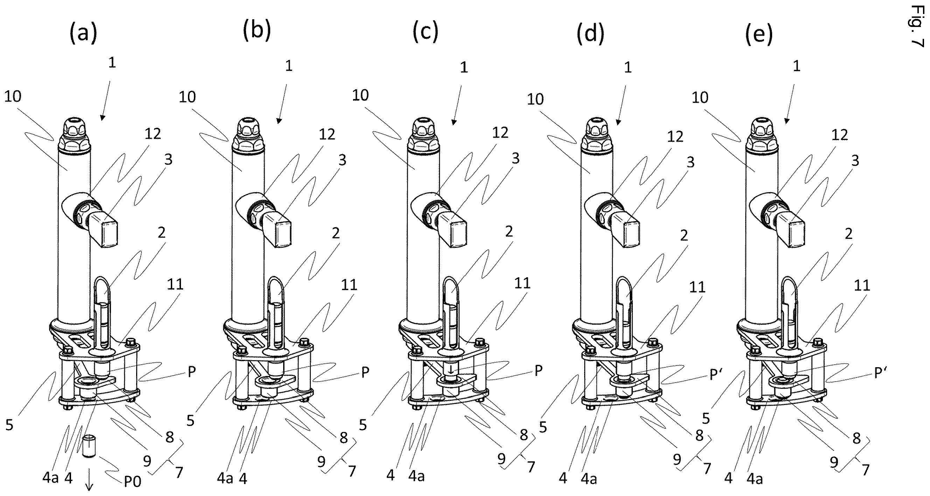

Fig. 7 ist eine isometrische Darstellung der Abwurfvorrichtung 1, wobei hier fünf verschiedene Zustände (a) bis (e) dargestellt sind. Grundsätzlich existiert eine erste Position P1, in der die zweite Öffnung 8a des zweiten horizontalen Elements 8 unterhalb des Magazins 2 positioniert ist, so dass ein Prüfkörper aus dem Magazin durch die zweite Öffnung 8a des zweiten horizontalen Elements 8 in die Aufnahmevorrichtung 9 fallen kann.

In einer zweiten Position P2 befindet sich die Aufnahmevorrichtung 9 über der ersten Öffnung 4a des ersten horizontalen Elements 4, so dass der sich in der Aufnahmevorrichtung 9 befindliche Prüfkörper P durch die erste Öffnung 4a des ersten horizontalen Elements 4 abgeworfen werden kann, um somit in/auf eine Mehrkopfwaage abgeworfen zu werden.

Im Zustand (a) wurde gerade ein Prüfkörper P0 abgeworfen. Somit ist der Hohlzylinder 9 direkt über der ersten Öffnung 4a des ersten horizontalen Elements 4 positioniert. Dementsprechend ist die Stellung des Schwenkarms in der zweiten Position P2 gemäß obiger Definition. Auf dem zweiten horizontalen Element 8 liegt ein Prüfkörper P auf, welcher das Magazin 2 teilweise verlassen hat. Dessen weiteres Herabfallen wird aber durch das zweite horizontale Element 8 verhindert. Das Magazin 2 ist auf dem Halter 11 angeordnet. Der Schwenkarm 5 verbindet den Antrieb 6 (hier nicht gezeigt), welcher im zylindrischen Gehäuse 10 untergebracht ist, mit der Transportvorrichtung 7, welche aus dem zweiten horizontalen Element 8, der zweiten Öffnung 8a sowie dem Hohlzylinder 9 besteht. Über einen Sensorhalter 12 ist ein optischer Sensor 3 oberhalb des Magazins 2 vorgesehen.

Im Zustand (b) hat sich der Schwenkarm 5 mit dem Hohlzylinder 9 sowie dem zweiten horizontalen Element 8 etwas nach rechts bewegt, und somit ist der Hohlzylinder 8 nicht mehr direkt mittig über der ersten Öffnung 4a des ersten horizontalen Elements 4.

Im Zustand (c), welcher der Position P1 gemäß obiger Definition entspricht, befindet sich das zweite horizontale Element 8 mit der zweiten Öffnung 8a sowie dem Hohlzylinder 9 direkt unterhalb des Magazins 2, so dass der unterste Prüfkörper P, welcher im Magazin 2 gelagert ist, direkt in den Hohlzylinder 9 rutschen kann. Der Hohlzylinder ist entsprechend zylindrisch und komplementär zu dem Prüfkörper P ausgebildet.

Im Zustand (d) bewegt sich der Schwenkarm 5 mit dem zweiten horizontalen Element 8 sowie dem Hohlzylinder 9 wieder etwas nach links, hier ist zu sehen, dass sich ein weiterer Prüfkörper P' bereits aus dem Magazin heraus bewegt hat.

Im Zustand (e) hat sich der Schwenkarm 5 mit dem zweiten horizontalen Element 8 sowie dem Hohlzylinder 9 noch etwas weiter nach links bewegt. Hier ist ersichtlich, dass der nächste Prüfkörper P' nun auf dem zweiten horizontalen Element 8 aufliegt, allerdings noch vom Magazin 2 teilweise gehalten ist und somit weder nach links noch nach rechts bewegt werden kann. Ein Fehlabwurf des Prüfkörpers P' ist also ausgeschlossen.

Die vorliegende Erfindung ist nicht auf die oben genannte Ausführungsform beschränkt. Die Aufnahmevorrichtung 9 kann auch durch ein anderes geometrisches Gebilde als einen Hohlzylinder ausgebildet sein, beispielsweise durch eine kreisförmige Anordnung von Stiften an der Unterseite des zweiten horizontalen Elements 8, welche so angeordnet sein müssten, dass ein Prüfkörper P darin aufgenommen werden kann. Ferner könnte die Transportvorrichtung 7 als ein anderer geometrischer Körper ausgestaltet sein, beispielsweise als Quader mit einer Öffnung.

Die vorliegende Erfindung bezieht sich auf eine Abwurfvorrichtung für Prüfkörper P zum Testen von Metalldetektionssystemen, welche zwischen Mehrkopfwaagen und Verpackungseinrichtungen angeordnet sind. Die Abwurfvorrichtung beinhaltet unter anderem ein Magazin 2, welches dazu angepasst ist, mindestens einen Prüfkörper P hierin aufzunehmen,
einen Sensor 3, der an mindestens einer Stelle im Magazin 2 das Vorhandensein eines oder mehrerer Prüfkörper P detektiert, sowie eine Transportvorrichtung, welche Prüfkörper P aus dem Magazin 2 entnimmt und in eine Mehrkopfwaage abwirft. Ferner bezieht sich die vorliegende Erfindung auf ein Verfahren zum Testen eines Metalldetektors MD zwischen einer Mehrkopfwaage M und einer Verpackungseinrichtung E, umfassend die Schritte des Prüfens der Verfügbarkeit von Prüfkörpern P zur Metalldetektion, des Abwurfs eines Prüfkörpers P über der Dosierrinne in den darunter angeordneten Vorratsbehälter der Mehrkopfwage M, sowie des Prüfens, ob der Metalldetektor MD zwischen der Mehrkopfwaage oder der Verpackungseinheit E den Prüfkörper P detektiert.

## Patentansprüche

1. Abwurfvorrichtung (1) zum Testen eines Metalldetektors (MD) einer Mehrkopfwaage oder einer Verpackungseinheit, aufweisend:
mindestens ein Magazin (2), welches dazu angepasst ist, mindestens einen Prüfkörper (P) hierin aufzunehmen,
einen Sensor (3), konfiguriert, um der an mindestens einer Stelle das Vorhandensein eines oder mehrerer Prüfkörper (P) im Magazin (2) zu detektieren,
ein erstes horizontales Element (4) mit einer ersten Öffnung (4a), welche mindestens den Durchmesser eines Prüfkörpers (P) aufweist,
einen Schwenkarm (5), welcher mittels eines Antriebs (6) zwischen mindestens zwei Positionen bewegbar ist,
eine Transportvorrichtung (7) für Prüfkörper (P), welche mit dem Schwenkarm (5) verbunden ist, welche aufweist:
ein zweites horizontales Element (8), welches eine zweite Öffnung (8a) aufweist, welche mindestens den Durchmesser eines Prüfkörpers (P) aufweist, wobei unter der zweiten Öffnung (8a) eine Aufnahmevorrichtung (9) befestigt ist, die mindestens den Durchmesser eines Prüfkörpers (P) aufweist, wobei sich in einer ersten Position (P1), welche der Schwenkarm (5) einnehmen kann, die zweite Öffnung (8a) des zweiten horizontalen Elements (8) unterhalb des Magazins (2) befindet, so dass ein Prüfkörper (P) aus dem Magazin (2) durch die zweite Öffnung (8a) des zweiten horizontalen Elements (8) in die Aufnahmevorrichtung (9) fallen kann,
wobei sich in einer zweiten Position (P2), welche der Schwenkarm (5) einnehmen kann, die Aufnahmevorrichtung (9) über der ersten Öffnung (4a) des ersten horizontalen Elements (4) befindet, so dass der sich in der Aufnahmevorrichtung (9) befindliche Prüfkörper (P) durch die erste Öffnung (4a) des ersten horizontalen Elements (4) abgeworfen werden kann,
wobei das zweite horizontale Element (8) konfiguriert ist, in jeder, von der ersten Position (P1) verschiedenen Position des Schwenkarms (5) das Nachfallen von weiteren Prüfkörpern (P) aus dem Magazin (2) zu verhindern.

2. Abwurfvorrichtung (1) gemäß Anspruch 1, wobei das Magazin (2) röhrenförmig ausgestaltet ist und vorzugsweise mindestens eine seitliche Öffnung (2a) oder einen mindestens teilweise durchsichtigen Abschnitt aufweist, die/der dazu angepasst ist, eine optische Sichtprüfung des Füllstandes des Magazins (2) zu ermöglichen.

3. Abwurfvorrichtung (1) gemäß Anspruch 1 oder 2, wobei der Sensor (3) ein optischer Distanzsensor (3o) ist, dessen Lichtstrahl vorzugsweise parallel zur Hauptachse vom Magazin (2) verläuft

4. Abwurfvorrichtung (1) gemäß Anspruch 3, wobei sowohl ein optischer Distanzsensor (3o) als auch ein Metallsensor (3m), welcher prüft, ob ein Prüfkörper (P), der sich im Magazin (2) befindet, metallische Bestandteile aufweist, vorgesehen sind.

5. Abwurfvorrichtung (1) gemäß einem der vorhergehenden Ansprüche, wobei der Antrieb (6) elektrisch, pneumatisch oder magnetisch ausgeführt ist, wobei der Antrieb bevorzugt ein bürstenloser Gleichstrommotor mit Planetengetriebe ist und weiter vorzugsweise eine zylindrische Form aufweist.

6. Abwurfvorrichtung (1) gemäß einem der vorhergehenden Ansprüche, wobei der Schwenkarm (5) und die Transportvorrichtung (7) dazu angepasst sind, einen Prüfkörper (P) in einer horizontalen Ebene vom Magazin (2) zum Abwurfort zu transportieren, wobei die Transportvorrichtung (7) vorzugsweise so ausgestaltet ist, dass Prüfkörper (P) formschlüssig vom Schwenkarm (5) aufgenommen und transportiert werden können, und der Schwenkarm (5) und sein Schwenkwinkel (a) vorzugsweise dazu angepasst sind, dass immer nur ein Prüfkörper (P) gleichzeitig transportierbar ist.

7. Abwurfvorrichtung (1) gemäß einem der vorhergehenden Ansprüche, ferner aufweisend:
ein Gehäuse (10),
einen drehbar daran angeordneten Halter (11), an welchem das Magazin (2) sowie das erstes horizontale Element (4) befestigt sind,
einen Sensorhalter (12), welcher am zylindrischen Gehäuse (10) befestigt ist und dazu angepasst ist, den Sensor (3) zu halten.

8. Abwurfvorrichtung (1) gemäß Anspruch 7, ferner aufweisend:
einen Ständer (13) und einen horizontalen Ausleger (14), welche über ein Kreuzklemmstück (15a) miteinander verbunden sind, wobei das zylindrische Gehäuse (8) durch ein Kreuzklemmstück (15b) am horizontalen Ausleger (14) befestigt ist.

9. Abwurfvorrichtung (1) gemäß Anspruch 8, wobei die Kreuzklemmstücke (15a, 15b) hygienegerecht mit einer Dichtung ausgeführt sind, und der Ständer (13) sowie der horizontale Ausleger (14) so ausgeführt sind, dass sie innen Kabel aufnehmen können.

10. Abwurfvorrichtung (1) gemäß einem der vorhergehenden Ansprüche, ferner aufweisend eine Auswerteeinheit (16), welche dazu eingerichtet ist, die Signale des Sensors (2) zu verarbeiten.

11. System aus Abwurfvorrichtung (1) gemäß einem der vorhergehenden Ansprüche, mindestens einem Prüfkörper (P) und einer Mehrkopfwaage (M), die unter anderem einen Verteilteller (VT), mehrere Wägebehälter (WB), einen Sammeltrichter (T), eine Verpackungseinheit (E) sowie einen Metalldetektor (MD) aufweist, wobei die erste Öffnung (4a) des ersten horizontales Elements (4) der Abwurfvorrichtung (1) über dem Verteilteller (VB) oder einem Wägebehälter (WT) der Mehrkopfwaage (M) angeordnet ist,
und der Metalldetektor (MD) am oder nahe des Sammeltrichters (T) oder der Verpackungseinheit (E) vorgesehen ist.

12. Verfahren zum Testen eines Metalldetektors (MD) einer Mehrkopfwaage oder einer Verpackungseinheit (E) mittels einer Abwurfvorrichtung gemäß einem der Ansprüche 1 bis 10, umfassend die folgenden Schritte:
a) Prüfen der Verfügbarkeit von Prüfkörpern (P) zur Metalldetektion;
b) falls in Schritt a) ein positives Ergebnis erzielt wird: Abwurf eines Prüfkörpers (P) oberhalb einer Dosierrinne in Öffnung des darunter angeordneten Vorratsbehälters der Mehrkopfwaage;
c) Falls in Schritt a) ein negatives Ergebnis erzielt wird: Aufforderung zum Auffüllen des Magazins und Verhinderung des Abwurfes eines Prüfkörpers.
d) Prüfen, ob der Metalldetektor (MD) der Mehrkopfwaage oder der Verpackungseinheit (E) den Prüfkörper (P) detektiert; Ausgabe und/oder Speichern eines positiven oder negativen Ergebnisses.

13. Verfahren gemäß Anspruch 12, wobei bei einem Testzyklus die Schritte b) und c) PK-fach wiederholt werden, wobei PK die Anzahl der Prüfkörper (P) beim Testbeginn ist.

14. Verfahren gemäß Anspruch 13, wobei zwischen den Abwürfen der Prüfkörper (P), eine Anzahl (R) von regulären Wägevorgängen durchgeführt werden, wobei R vorzugsweise eine Zahl zwischen 1 und 100 ist.

15. Verfahren gemäß Anspruch 12 oder 13, wobei, falls in Schritt a) ein negatives Ergebnis erzielt wird, eine Fehlermeldung ausgegeben wird,
wobei Schritt a) durch einen Sensor (3) ausgeführt wird, welcher vorzugsweise ein optischer Sensor (3o) oder ein Metallsensor (3m) ist.

## Claims

1. Dropping device (1) for testing a metal detector (MD) of a multihead scale or a packaging unit, comprising:
at least one magazine (2) adapted to receive at least one test specimen (P) therein,
a sensor (3) which is configured to detect the presence of one or more test specimens (P) in the magazine (2) at at least one point,
a first horizontal element (4) with a first opening (4a) having at least the diameter of a test specimen (P),
a pivot arm (5) which can be moved between at least two positions by means of a drive (6),
a transport device (7) for test specimens (P), which is connected to the pivot arm (5), which comprises:
a second horizontal element (8) having a second opening (8a) having at least the diameter of a test specimen (P), wherein a receiving device (9) having at least the diameter of a test specimen (P) is fixed below the second opening (8a),
wherein the second opening (8a) of the second horizontal element (8) is located below the magazine (2) in a first position (P1) which the pivot arm (5) can adopt, so that a test specimen (P) can fall from the magazine (2) through the second opening (8a) of the second horizontal element (8) into the receiving device (9),
wherein the receiving device (9) is located above the first opening (4a) of the first horizontal element (4) in a second position (P2) which the pivot arm (5) can adopt, so that the test specimen (P) located in the receiving device (9) can be ejected through the first opening (4a) of the first horizontal element (4),
wherein the second horizontal element (8) is configured to prevent further test specimens (P) from falling out of the magazine (2) in any position of the pivot arm (5) other than the first position (P1).

2. Dropping device (1) according to claim 1, wherein the magazine (2) is tubular in shape and preferably has at least one lateral opening (2a) or at least partially transparent portion, which is adapted to allow visual inspection of the filling level of the magazine (2).

3. Dropping device (1) according to claim 1 or 2, wherein the sensor (3) is an optical distance sensor (3o), the light beam of which preferably runs parallel to the main axis of the magazine (2).

4. Dropping device (1) according to claim 3, wherein both an optical distance sensor (3o) and a metal sensor (3m), which checks whether a test specimen (P) located in the magazine (2) has metallic components, are provided.

5. Dropping device (1) according to any of the preceding claims, wherein the drive (6) is electric, pneumatic or magnetic, wherein the drive is preferably a brushless DC motor with planetary gear and further preferably has a cylindrical shape.

6. Dropping device (1) according to one of the preceding claims, wherein the pivot arm (5) and the transport device (7) are adapted to transport a test specimen (P) in a horizontal plane from the magazine (2) to the discharge location, wherein the transport device (7) is preferably designed in such a way that test specimens (P) can be positively received and transported by the pivot arm (5), and the pivot arm (5) and its pivot angle (α) are preferably adapted in such a way that only one test specimen (P) can be transported at a time.

7. Dropping device (1) according to any one of the preceding claims, further comprising:
a housing (10),
a holder (11) rotatably arranged thereon, to which the magazine (2) and the first horizontal element (4) are attached,
a sensor holder (12) which is attached to the cylindrical housing (10) and is adapted to hold the sensor (3).

8. Dropping device (1) according to claim 7, further comprising:
a stand (13) and a horizontal extension arm (14) which are connected to each other by a cross clamp (15a), wherein the cylindrical housing (8) is attached to the horizontal extension arm (14) by a cross clamp (15b).

9. Dropping device (1) according to claim 8, wherein the cross clamps (15a, 15b) are hygienically designed with a seal, and the stand (13) as well as the horizontal extension arm (14) are designed to receive cables internally.

10. Dropping device (1) according to one of the preceding claims, further comprising an evaluation unit (16) which is adapted to process the signals of the sensor (2).

11. System comprising a dropping device (1) according to one of the preceding claims, at least one test specimen (P) and a multihead scale (M) which comprises, inter alia, a distribution plate (VT), a plurality of weighing hoppers (WB), a collection funnel (T), a packaging unit (E) and a metal detector (MD),
wherein the first opening (4a) of the first horizontal element (4) of the discharge device (1) is arranged above the distribution plate (VT) or a weighing hopper (WT) of the multihead scale (M),
and the metal detector (MD) is provided at or near the collection funnel (T) or packaging unit (E).

12. Method for testing a metal detector (MD) of a multihead scale or a packaging unit (E) by means of a dropping device according to any one of claims 1 to 10, comprising the following steps:
a) Checking the availability of test specimens (P) for metal detection;
b) If a positive result is obtained in step a): Dropping a test specimen (P) above a dosing chute into the opening of the storage hopper of the multihead scale located below;
c) If a negative result is obtained in step a): Request to refill the magazine and prevent the dropping of a test specimen.
d) Checking whether the metal detector (MD) of the multihead scale or the packaging unit (E) detects the test specimen (P); outputting and/or storing a positive or negative result.

13. Method according to claim 12, wherein in a test cycle steps b) and c) are repeated PK times, where PK is the number of test specimens (P) at the start of the test.

14. Method according to claim 13, wherein a number (R) of regular weighing operations are performed between the drops of the test specimens (P), where R is preferably a number between 1 and 100.

15. Method according to claim 12 or 13, wherein, if a negative result is obtained in step a), an error message is output,
wherein step a) is performed by a sensor (3), which is preferably an optical sensor (3o) or a metal sensor (3m).

## Revendications

1. Dispositif d'éjection (1) pour tester un détecteur de métaux (MD) d'une balance à têtes multiples ou d'une unité d'emballage, présentant :
au moins un magasin (2), lequel est adapté pour recevoir à l'intérieur au moins un corps d'essai (P),
un capteur (3) configuré pour détecter sur au moins un emplacement la présence d'un ou de plusieurs corps d'essai (P) dans le magasin (2) ;
un premier élément horizontal (4) avec une première ouverture (4a), laquelle présente au moins le diamètre d'un corps d'essai (P),
un bras pivotant (5), lequel peut être déplacé entre au moins deux positions au moyen d'un entraînement (6),
un dispositif de transport (7) pour des corps d'essai (P), lequel est relié au bras pivotant (5), lequel présente :
un deuxième élément horizontal (8), lequel présente une deuxième ouverture (8a), laquelle présente au moins le diamètre d'un corps d'essai (P), dans lequel est fixé sous la deuxième ouverture (8a) un dispositif de logement (9) qui présente au moins le diamètre d'un corps d'essai (P),
dans lequel la deuxième ouverture (8a) du deuxième élément horizontal (8) se trouve sous le magasin (2) dans une première position (P1) que le bras pivotant (5) peut adopter de sorte qu'un corps d'essai (P) peut tomber dans le dispositif de logement (9) hors du magasin (2) par la deuxième ouverture (8a) du deuxième élément horizontal (8),
dans lequel le dispositif de logement (9) se trouve au-dessus de la première ouverture (4a) du premier élément horizontal (4) dans une deuxième position (P2) que le bras pivotant (5) peut adopter de sorte que le corps d'essai (P) se trouvant dans le dispositif de logement (9) peut être éjecté par la première ouverture (4a) du premier élément horizontal (4), dans lequel le deuxième élément horizontal (8) est configuré pour empêcher, dans chaque position, autre que la première position (P1), du bras pivotant (5), la chute ultérieure d'autres corps d'essai (P) hors du magasin (2).

2. Dispositif d'éjection (1) selon la revendication 1, dans lequel le magasin (2) est configuré en forme de tube et présente de préférence au moins une ouverture latérale (2a) ou une section au moins en partie translucide qui est adaptée pour permettre une inspection visuelle de l'état de remplissage du magasin (2).

3. Dispositif d'éjection (1) selon la revendication 1 ou 2, dans lequel le capteur (3) est un capteur de distance optique (3o), dont le faisceau de lumière s'étend de préférence de manière parallèle par rapport à l'axe principal du magasin (2).

4. Dispositif d'éjection (1) selon la revendication 3, dans lequel sont prévus à la fois un capteur de distance optique (3o) et un capteur de métaux (3m) qui vérifient si un corps d'essai (P) qui se trouve dans le magasin (2) présente des éléments métalliques.

5. Dispositif d'éjection (1) selon l'une quelconque des revendications précédentes, dans lequel l'entraînement (6) est réalisé de manière électrique, pneumatique ou magnétique, dans lequel l'entraînement est de manière préférée un moteur à courant continu sans balai avec un engrenage planétaire et présente par ailleurs de préférence une forme cylindrique.

6. Dispositif d'éjection (1) selon l'une quelconque des revendications précédentes, dans lequel le bras pivotant (5) et le dispositif de transport (7) sont adaptés pour transporter un corps d'essai (P) dans un plan horizontal du magasin (2) vers l'emplacement d'éjection, dans lequel le dispositif de transport (7) est configuré de préférence de telle sorte que des corps d'essai (P) peuvent être logés et transportés par complémentarité de forme par le bras pivotant (5) et le bras pivotant (5) et son angle de pivotement (α) sont adaptés de préférence pour que systématiquement seulement un corps d'essai (P) puisse être transporté simultanément.

7. Dispositif d'éjection (1) selon l'une quelconque des revendications précédentes, présentant en outre :
un boîtier (10),
un système de retenue (11) disposé sur celui-ci de manière à pouvoir tourner, sur lequel le magasin (2) et le premier élément horizontal (4) sont fixés,
un système de retenue de capteur (12), lequel est fixé sur le boîtier (10) cylindrique et est adapté pour maintenir le capteur (3).

8. Dispositif d'éjection (1) selon la revendication 7, présentant en outre :
un socle (13) et une flèche horizontale (14), lesquels sont reliés l'un à l'autre par l'intermédiaire d'une pièce de serrage croisé (15a),
dans lequel le boîtier (8) cylindrique est fixé par une pièce de serrage croisé (15b) sur la flèche (14) horizontale.

9. Dispositif d'éjection (1) selon la revendication 8, dans lequel les pièces de serrage croisé (15a, 15b) sont réalisées conformément aux règles d'hygiène avec un joint d'étanchéité, et le socle (13) ainsi que la flèche (14) horizontale sont réalisés de telle sorte qu'ils peuvent loger à l'intérieur des câbles.

10. Dispositif d'éjection (1) selon l'une quelconque des revendications précédentes, présentant en outre une unité d'évaluation (16), laquelle est mise au point pour traiter les signaux du capteur (2).

11. Système composé d'un dispositif d'éjection (1) selon l'une quelconque des revendications précédentes, d'au moins un corps d'essai (P) et d'une balance à têtes multiples (M), qui présente entre autres un plateau de distribution (VT), plusieurs contenants de pesage (WB), une trémie de collecte (T), une unité d'emballage (E) ainsi qu'un détecteur de métaux (MD),
dans lequel la première ouverture (4a) du premier élément horizontal (4) du dispositif d'éjection (1) est disposée au-dessus du plateau de distribution (VB) ou d'un contenant de pesage (WT) de la balance à têtes multiples (M),
et le détecteur de métaux (MD) est prévu sur ou à proximité de la trémie de collecte (T) ou de l'unité d'emballage (E).

12. Procédé pour tester un détecteur de métaux (MD) d'une balance à têtes multiples ou d'une unité d'emballage (E) au moyen d'un dispositif d'éjection selon l'une quelconque des revendications 1 à 10, comprenant les étapes suivantes :
a) vérification de la disponibilité de corps d'essai (P) pour la détection de métaux ;
b) si un résultat positif est atteint lors de l'étape a) : éjection d'un corps d'essai (P) au-dessus d'une rigole de dosage dans l'ouverture du réservoir disposé en dessous de la balance à têtes multiples ;
c) si un résultat négatif est obtenu lors de l'étape a) : demande de remplissage du magasin et d'empêchement de l'éjection d'un corps d'essai,
d) vérification si le détecteur de métaux (MD) de la balance à têtes multiples ou de l'unité d'emballage (E) détecte le corps d'essai (P) ; envoi et/ou mémorisation d'un résultat positif ou négatif.

13. Procédé selon la revendication 12, dans lequel lors d'un cycle de test, les étapes b) et c) sont répétées PK fois, dans lequel PK est le nombre des corps d'essai (P) lors du début du test.

14. Procédé selon la revendication 13, dans lequel un nombre (R) d'opérations de pesage régulières est mis en œuvre entre les éjections des corps d'essai (P), dans lequel R est de préférence un chiffre entre 1 et 100.

15. Procédé selon la revendication 12 ou 13, dans lequel, si lors de l'étape a) un résultat négatif est obtenu, un message d'erreur est envoyé,
dans lequel l'étape a) est exécutée par un capteur (3) lequel est de préférence un capteur optique (3o) ou un capteur de métaux (3m).
